# EUROPEAN PATENT APPLICATION

(11) **EP 1 087 315 A2**
(43) Date of publication of application: **28.03.2001**
(21) Application number: 00307838.3
(22) Date of filing: 11.09.2000
(51) Int. Cl.: G06F 17/60

(54) **Electronic mail attachment verification**

(30) Priority: 23.09.1999 US 404411
(71) Applicant: LUCENT TECHNOLOGIES INC., Murray Hill, New Jersey 07974-0636 (US)
(72) Inventor: Blott, Stephen Michael, Gillette, New Jersey 07901 (US)
(74) Representative: Buckley, Christopher Simon Thirsk

(57) **Abstract**

A method and apparatus for verifying email attachments are disclosed. Upon a user initiating a send of an email message, the message is scanned to determine if the message contains an attachment indicator term. Attachment indicator terms are terms which, if present in an email message, would generally indicate that an attachment should be present in the message. If the message contains an attachment indicator term, then it is determined whether the message actually contains an attachment. If not, then the user is prompted with a send verification request which gives the user an opportunity to send the message notwithstanding the prompt, or to return to a composition screen in order to attach an inadvertently omitted attachment. In one embodiment, the attachment indicator term(s) is identified to the user (e.g. via highlighting) upon return to the composition screen.

## Description

### Field of the Invention

The invention relates generally to computer systems, and more particularly to the processing of electronic mail.

### Background of the Invention

Electronic mail (also known as email) systems allow users to send and receive electronic messages via a computer network. Electronic mail messages may include a message body as well as one or more additional files known in the art as attachments. The attachments are generally existing files which were created with another application, such as a word processor. During composition of an electronic message, a user will typically compose the message body and indicate one or more files which are to be attached to the message body. When the user indicates that the message is to be sent, the electronic mail software being used by the user will bundle the message body plus the attachments into a single message and send the message to the intended recipient(s).

One problem with electronic mail is that users often fail to perform the steps necessary to attach a desired file to an electronic mail message. As a result, an electronic mail message will often indicate that a certain file is attached, when, in fact, the attachment has not been sent to the recipient. Sometimes the sender realizes this after the original message has been sent and must resend the original message with the appropriate attachment now attached. More often, the recipient realizes that an intended file was not attached properly, and the recipient sends the sender a message requesting that the message be re-sent, this time with the appropriate attachment. This series of events can be both embarrassing to the sender and a waste of network resources.

### Summary of the Invention

The present invention solves the above described problem by prompting a user if an email message contains an attachment indicator term but the email message does not contain an attachment. Attachment indicator terms are terms which, if present in an email message, would generally indicate that an attachment should be present in the message.

In accordance with one embodiment of the invention, upon a user initiating a send of an email message, the message is scanned for an attachment indicator term. If such a term is present but the message does not contain an attachment, then the user is prompted with a message indicating that an attachment may have inadvertently been omitted from the message. The user may then decide to send the message notwithstanding the prompt, or the user may return to a composition screen to add the omitted attachment. In accordance with one embodiment, upon return to the composition screen, the attachment indicator term(s) present in the message may be identified to the user, for example by highlighting.

These and other advantages of the invention will be apparent to those of ordinary skill in the art by reference to the following detailed description and the accompanying drawings.

### Brief Description of the Drawings

Fig. 1 shows a functional block diagram of a programmable computer 100 in which the present invention may be implemented; and
Fig. 2. shows a flowchart of the steps performed in accordance with one embodiment of the invention.

### Detailed Description

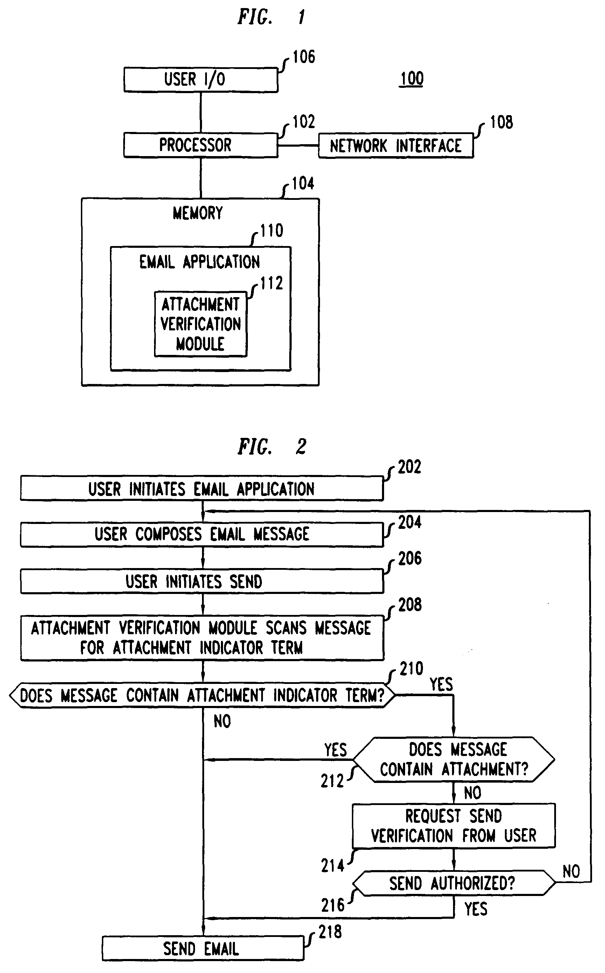

Fig. 1 shows a functional block diagram of a programmable computer in which the present invention may be implemented. The computer 100 contains a processor 102 which controls the overall operation of the computer 100 by executing computer program instructions which are stored in a memory 104 connected to processor 102. Memory 104 represents any type of computer readable medium, including without limitation, random access memory (RAM), read only memory (ROM), magnetic disk or tape, optical disk, or holographic memory. Memory 104 may be implemented using any computer readable medium technology, or a combination of such technologies. Processor 102 is also connected to user I/O 106 and a network interface 108. The user I/O 106 represents the elements which are used to interact with a user and may include, without limitation, a display screen, keyboard, pointing device (e.g. mouse), microphone, and speakers. The network interface 108 allows the computer 100 to communicate with other devices via a computer network, such as a local area network (LAN) or wide area network (WAN). Of course, Fig. 1 is a high level functional block diagram of only a portion of the components which are necessary for operation of a computer. Since the configuration and operation of programmable computers are well known in the art, for clarity, the details of computer 100 are not shown.

The computer 100 contains an email application 110 in memory 104 which contains computer program instructions to implement an electronic mail application. Electronic mail applications, such as Microsoft Exchange, are well known in the art. In accordance with the present invention, the email application contains additional functionality which is represented in Fig. 1 as attachment verification module 112. The attachment verification module 112 contains computer program instructions which, when executed by processor 102, implement the present invention.

The steps performed by computer 100 in accordance with one embodiment of the present invention are shown in Fig. 2. In step 202 a user initiates the email application 110 (Fig. 1) by, for example, clicking on an appropriate icon displayed on a display screen. In step 204, the user composes the email message, typically in an email composition window which is displayed on the display screen in response to step 202. In step 206 the user indicates to the email application that the message is to be sent. At this point, which is prior to sending the email message, the attachment verification module 112 is executed by processor 102 in order to perform steps 208-216

In step 208 the attachment verification module scans the email message composed by the user to determine if the message contains an attachment indicator term. An attachment indicator term is a term which, if present in the message, would generally indicate that the user intended to send an attachment with the message. For example, when attaching a file to a message, a user often places a phrase such as, "I have attached the report to this message". Thus, the term "attached" is an attachment indicator term. Additional attachment indicator terms may include some or all of the following terms: attach, attached, attachment, include, included, includes, appended, append. It is to be understood that the set of attachment indicator terms is not limited to those listed herein, but may include other terms as well, and the particular terms used as the attachment indicator terms in any particular embodiment are implementation choices. Of course, attachment indicator terms will be different in different languages. Further, the attachment indicator terms may be a user option that can be modified on a per user basis depending on user preferences.

In step 210 it is determined whether the email message contains an attachment indicator term. If not, then the message is sent in step 218. If the email message contains an attachment indicator term, then in step 212 it is determined whether the message actually contains an attachment. If it does, then the message is sent in step 218. If the email message does not contain an attachment, then in step 214 a send verification request is sent to the user. This verification request prompts the user by indicating that the message contained an attachment indicator term but that there was no attachment, thus signaling the possible omission of a desired attachment file. The user may then authorize sending notwithstanding the prompt, in which case the test in step 216 is yes and the message is sent in step 218. If the user does not authorize sending, then the test in step 216 is no and control returns to the message composition step 204 thus allowing the user to attach the desired file to the email message.

In one embodiment of the invention, upon returning to step 204 from step 216, the attachment indicator term(s) which was found in step 208 may be identified so that that user can better ascertain whether an attachment was inadvertently omitted. This identification may be accomplished, for example, by highlighting the attachment indicator term(s) in the message body.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention.

## Claims

1. A method for processing electronic mail comprising the step of:
prompting a user if an email message contains an attachment indicator term but the email message does not contain an attachment.

2. The method of claim 1 wherein said step of prompting comprises the step of:
returning the user to an email composition screen.

3. The method of claim 2 further comprising the step of:
identifying the attachment indicator term to the user.

4. The method of claim 1 wherein said step of prompting comprises the step of:
displaying a message to the user indicating that the email message does not contain an attachment.

5. The method of claim 1 further comprising the step of:
scanning the email message for said attachment indicator term when the user initiates a send action.

6. A computer comprising:
means for prompting a user if an email message contains an attachment indicator term but the email message does not contain an attachment.

7. The computer of claim 6 wherein said means for prompting comprises:
means for returning the user to an email composition screen

8. The computer of claim 7 further comprising:
means for identifying the attachment indicator term to said user.

9. The computer of claim 6 wherein said means for prompting comprises:
means for displaying a message to the user indicating that the email message does not contain an attachment.

10. The computer of claim 6 further comprising:
means for scanning the email message for said attachment indicator term when the user initiates a send action.

11. A computer readable medium storing computer program instructions defining the step of:
prompting a user if an email message contains an attachment indicator term but the email message does not contain an attachment.

12. The computer readable medium of claim 11 wherein said computer program instructions defining the step of prompting further define the step of:
returning the user to an email composition screen.

13. The computer readable medium of claim 12 further comprising computer program instructions defining the step of:
identifying the attachment indicator term to said user.

14. The computer readable medium of claim 11 wherein said computer program instructions defining the step of prompting further define the step of:
displaying a message to the user indicating that the email message does not contain an attachment.

15. The computer readable medium of claim 11 further comprising computer program instructions defining the step of:
scanning the email message for said attachment indicator term when the user initiates a send action.
